# EUROPEAN PATENT APPLICATION

(11) **EP 4 815 064 A1**
(43) Date of publication of application: **30.09.2026**
(21) Application number: 24894263.3
(22) Date of filing: 04.04.2024
(51) Int. Cl.: H01M 4/62, H01M 4/13, H01M 10/052, H01M 4/02

(54) **NEGATIVE ELECTRODE FOR ALL SOLID-STATE BATTERY AND ALL SOLID-STATE BATTERY INCLUDING SAME**

(30) Priority: 21.11.2023 KR 20230162450
(71) Applicant: SAMSUNG SDI CO., LTD., Yongin-si, Gyeonggi-do 17084 (KR)
(72) Inventor: KOO, Dongho, Yongin-si, Gyeonggi-do 17084 (KR); LEE, Jangwook, Yongin-si, Gyeonggi-do 17084 (KR); LEE, Sangkyu, Yongin-si, Gyeonggi-do 17084 (KR); NOH, Sunghyun, Yongin-si, Gyeonggi-do 17084 (KR); LEE, Bohyung, Yongin-si, Gyeonggi-do 17084 (KR)
(74) Representative: Michalski Hüttermann & Partner mbB
(86) International application number: PCT/KR2024/004419
(87) International publication number: WO 2025/110365

(57) **Abstract**

The present invention relates to a negative electrode for an all solid-state battery and an all solid-state battery including same, the negative electrode comprising a negative electrode-coating layer comprising a carbon-based material, a metal, and a binder containing polyacrylic acid and a styrene-butadiene rubber in 5:4 to 5:2 weight ratio.

## Description

### TECHNICAL FIELD

Embodiments relate to an all-solid-state battery.

### BACKGROUND ART

Recently, rapid development is being made in electronic devices using batteries, such as mobile phones, laptop computers, and electric vehicles.

As such a battery, the development of all-solid-state batteries using lithium metal as the negative electrode is underway. An all-solid-state battery refers to a battery in which all materials are solids, and particularly, a battery using a solid electrolyte. Since the electrolyte of an all-solid-state battery is solid, it is structurally rigid and has a low risk of fire or explosion due to leakage caused by external impact or the like. In addition, the battery shape may be formed in various ways.

### DETAILED DESCRIPTION OF THE INVENTION

### TECHNICAL PROBLEM

One embodiment provides a negative electrode for an all-solid-state battery exhibiting low resistance, thereby demonstrating excellent coulombic efficiency and excellent cycle-life characteristics.

Another embodiment provides an all-solid-state battery including the negative electrode.

### TECHNICAL SOLUTION

One embodiment provides a negative electrode for an all solid-state battery, including a negative electrode-coating layer including a binder comprising polyacrylic acid and a styrene-butadiene rubber in a weight ratio of 5:4 to 5:2; a carbon-based material; and a metal.

Another embodiment provides an all-solid-state battery including the negative electrode, a positive electrode, and a solid electrolyte layer positioned between the positive electrode and the negative electrode.

### ADVANTAGEOUS EFFECTS

A negative electrode for an all-solid-state battery according to one embodiment includes an aqueous binder, and thus, it may exhibit low resistance, excellent initial efficiency, and excellent cycle-life characteristics.

### DESCRIPTION OF THE DRAWINGS

FIG. 1 is a schematic diagram illustrating a negative electrode for an all-solid-state battery according to one embodiment.
FIG. 2 is a schematic cross-sectional view illustrating an all-solid-state battery according to one embodiment.

### BEST MODE FOR PERFORMING INVENTION

Hereinafter, embodiments of the present invention will be described in detail. However, these embodiments are provided and the disclosure is not limited thereby and the disclosure may be defined by the scope of the claims described later.

Terms used in the specification is used to explain embodiments, but are not intended to be limiting. Expressions in the singular include expressions in plural unless the context clearly dictates otherwise.

The term "combination thereof may include a mixture, a laminate, a complex, a copolymer, an alloy, a blend, a reactant of constituents.

The terms "comprise", "include" or "have" are used to designate that the performed features, numbers, step, components, or a combination thereof is present, but it should be understood that the possibility of presence or addition of one or more other features, numbers, steps, components, or a combination thereof are not to be precluded in advance.

Throughout the specification, unless explicitly described to the contrary, the word "comprise" and variations such as "comprises" or "comprising" will be understood to imply the inclusion of stated elements but not the exclusion of any other element.

Furthermore, the terms "about" and "substantially" used throughout the present specification refer to the meaning of the mentioned with inherent preparation and material permissible errors when presented, and are used in the sense of being close to or near that value, and they are used to help understand the present invention and to prevent unconscientious infringers from unfairly exploiting the disclosure where accurate or absolute values are mentioned.

In the specification, A and/or B and A or B are not exclusive terms, and indicate A, B, or both A and B.

Unless otherwise defined in the specification, it will be understood that when an element, such as a layer, a film, a region, a plate, and the like is referred to as being "on" or "over" another element, it may be directly on, connected to, or coupled to the other element or layer, or one or more intervening elements may be present.

As used herein, "particle size" or "a particle diameter", may be an average particle diameter. In addition, the average particle diameter may be defined as an average particle diameter (D50) indicating the diameter of particles at the 50 % cumulative volume point of a cumulative size-distribution curve. The particle diameter may be measured by a method well known to those skilled in the art, for example, by a particle size analyzer, or by a transmission electron microscopic image, a scanning electron microscopic image, or a field emission scanning electron microscopy (FE-SEM). In another embodiments, the particle diameter may be determined by measuring with a dynamic light-scattering measurement device and performing a data analysis, and counting the number of particles for each particle size range, and calculating therefrom to obtain an average particle diameter (D50) value, or the particle diameter may be measured by a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50 % standard of particle size distribution in the measuring device.

The term "thickness" may be measured through a photograph taken with an optical microscope such as a scanning electron microscope.

A negative electrode for an all-solid-state battery according to one embodiment includes a negative electrode-coating layer including a binder comprising polyacrylic acid and a styrene-butadiene rubber in a weight ratio of 5:4 to 5:2; a carbon-based material; and a metal.

Since the aqueous binder such as polyacrylic acid and styrene-butadiene rubber is used as the binder for the negative electrode-coating layer, it may be environmentally friendly.

Furthermore, the use of polyacrylic acid may reduce resistance and the use of the styrene-butadiene rubber may improve adhesive strength.

The effects of using polyacrylic acid together with styrene-butadiene rubber may be achieved if polyacrylic acid and styrene-butadiene rubber are included at a weight ratio of 5:4 to 5:2.

The use of polyacrylic acid may reduce resistance but may also decrease adhesive strength; however, this decrease in adhesive strength may be prevented by using styrene-butadiene rubber together, particularly, if polyacrylic acid and styrene-butadiene rubber are used at a weight ratio of 5:4 to 5:2. In this way, using polyacrylic acid and styrene-butadiene rubber at a weight ratio of 5:4 to 5:2 may effectively reduce resistance while maintaining adhesive strength at a level comparable to that achieved if styrene-butadiene rubber is used alone. Thus, capacity and cycle-life characteristics may be improved.

If the weight ratio of polyacrylic acid and styrene-butadiene rubber falls outside the range, it is not desired, that for example, if the weight ratio of polyacrylic acid/styrene-butadiene rubber is smaller than 5/4, resistance may be reduced, whereas, if it exceeds 5/2, adhesive strength may be decreased.

In one embodiment, the amount of the binder may be, based on the total 100 wt% of the negative electrode-coating layer, 6 wt% to 10 wt%, or 6.5 wt% to 8.5 wt%. If the amount of the binder falls within the range, in the negative electrode-coating layer composition preparation, advantages such as excellent phase stability of the composition and excellent dispersibility of the carbon-based material and the metal may be obtained.

In the negative electrode-coating layer, the carbon-based material and the metal may be present as a mixture, or the metal may be supported on the carbon-based material.

The carbon-based material may be, for example, crystalline carbon, amorphous carbon, or combination thereof, or may be amorphous carbon. The crystalline carbon may be, for example, natural graphite, artificial graphite, mesophase carbon microbead, carbon nanotubes, graphene, or a combination thereof. The crystalline carbon may have unspecified shape, sheet shape, flake shape, spherical shape, or fiber shape. The amorphous carbon may be, for example, carbon black, acetylene black, denka black, ketjen black, furnace black, activated carbon, graphene, or combinations thereof. The carbon black may be Super P (available from Timcal, Ltd.). The amorphous carbon is not limited thereto, and any material which may be classified as amorphous carbon in the field may be available.

In one embodiment, the carbon-based material may be single particles or an agglomerated product that has a secondary particle form where primary particles are agglomerated. If the carbon-based material is single particles, the size of the carbon-based material may have an average particle diameter of 100 nm or less, for example, a nanosize of 10 nm to 100 nm.

If the carbon-based material is an agglomerated product, the particle diameter of the primary particle may be 20 nm to 100 nm and the particle diameter of the secondary particle may be 1 µm to 20 µm.

In one embodiment, a particle diameter of the primary particles may be 20 nm to, 100 nm, 20 nm to 90 nm, 20 nm to 80 nm, or 30 nm to 70 nm.

In one embodiment, a particle diameter of the secondary particle may be 1 µm to 20 µm, 2 µm to 15 µm, or 3 µm to 10 µm.

The shape of the primary particle may be spherical, oval, plate-shaped, or combinations thereof, and in some embodiments, the shape of the primary particle may be spherical, oval, or combinations thereof.

The metal may be Ag, Au, Sn, Zn, Al, Mg, Ge, Cu, In, Ni, Bi, Pt, Pd, or a combination thereof, or may be Ag. The inclusion of the metal in the negative electrode coating layer may further improve the electrical conductivity of the negative electrode.

The metal may be nano particles and the size of the metal nano particles, for example, an average size of the metal nano particles may be 5 nm to 800 nm, 5 nm to 700 nm, 5 nm to 500 nm, or 5 nm to 300 nm, however, if it is a nanometer size, it may be appropriately used. If the metal nanoparticles with nano size are used, the battery characteristics, for example, cycle-life characteristics of the all solid-state battery, may be improved. If the metal particle size increases to the micrometers scale, the uniformity of the metal particles in the negative electrode coating layer may decrease, which may lead to an increase in current density in a specific area, and a deterioration of cycle life characteristics, thus being undesirable.

In one embodiment, an amount of the metal may be, based on the total 100 wt% of the negative electrode-coating layer, 14 wt% to 35 wt%, 18 wt% to 25 wt%, or 20 wt% to 24 wt%.

Furthermore, an amount of the carbon-based material may be, based on the total 100 wt% of the negative electrode-coating layer, 55 wt% to 80 wt%, 60 wt% to 75 wt%, or 65 wt% to 70 wt%.

In one embodiment, the negative electrode-coating layer may further include a solid electrolyte. The solid electrolyte may be an inorganic solid electrolyte such as a sulfide-based solid electrolyte, an oxide-based solid electrolyte, a halide-based solid electrolyte, and the like, or solid polymer electrolyte.

In one embodiment, the sulfide-based solid electrolyte may be Li₂S-P₂S₅, Li₂S-P₂S₅-LiX (where X is an halogen element, for example, I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S5-ZₘSₙ (where m and n are each integers of 0 or greater and 12 or less, and Z is one of Ge, Zn, or Ga), Li₂S-GeS₂, Li₂S-SiS₂-Li₃PO₄, Li₂S-SiS₂ -LiₚMO_{q} (where p and q are each integers of 0 or greater and 12 or less, and M is one of P, Si, Ge, B, Al, Ga In), LiₐM_{b}P_{c}S_{d}Aₑ (where a, b, c, d, and e are each integers of 0 or greater and 12 or less, and M is Ge, Sn, Si, or a combination thereof, and A is one of F, Cl, Br, or I). The sulfide-based solid electrolyte may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2). Furthermore, specifically, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, or the like.

In one embodiment, the sulfide-based solid electrolyte may be an argyrodite-type sulfide-based solid electrolyte. The argyrodite-type sulfide-based solid electrolyte may be, for example, LiₐM_{b}P_{c}S_{d}Aₑ (where a, b, c, d, and e are each an integer of 0 or more and 12 or less, and M is Ge, Sn, Si, or a combination thereof, and A is F, Cl, Br, or I).

The specific example may be Li₃PS₄, Li₇P₃S₁₁, Li₇PS₆, Li₆PS₅Cl, Li₆PS₅Br, Li5.8PS4.8Cl1.2, Li6.2PS5.2Br0.8, Li6PS5I, Li5.75PS4.75Cl1.25, (Li5.69Cu0.06)PS4.75Cl1.25, (Li5.72Cu0.03)PS4.75Cl1.25, (Li5.69Cu0.06)P(S4.70(SO4)0.05)Cl1.25, (Li5.69Cu0.06)P(S4.60(SO4)0.15)Cl1.25, (Li5.72Cu0.03)P(S4.725(SO4)0.025)Cl1.25, (Li5.72Na0.03)P(S4.725(SO4)0.025)Cl1.25, Li5.75P(S4.725(SO4)0.025)Cl1.25, or combination thereof, but it is not limited thereto.

The sulfide-based solid electrolyte may be amorphous, crystalline, or a combination thereof. The sulfide-based solid electrolyte may be prepared, for example, by mixing Li₂S and P₂S₅ at a mole ratio of 50:50 to 90:10, or 50:50 to 80:20. In the range of the mixing ratio, the sulfide-based solid electrolyte exhibiting excellent ionic conductivity may be prepared. By additionally including other components such as SiS₂, GeS₂, B₂S₃, or the like, ionic conductivity may be further improved.

As a mixing method for sulfur-containing raw materials to prepare a sulfide-based solid electrolyte, mechanical milling or a solution method may be applied. Mechanical milling is a method in which starting raw materials and a ball mill or the like are placed into a reactor and vigorously agitated to pulverize the starting raw material into fine particles and mix them. The solution method may provide a solid electrolyte as a precipitate by mixing starting raw material in a solvent. If the heat-treating is carried out after mixing, the crystal of the solid electrolyte may become more robust and ionic conductivity may be improved. For example, a sulfide-based solid electrolyte may be prepared by mixing sulfur-containing raw materials and performing heat treatment twice or more, and in this case, a sulfide-based solid electrolyte having high ionic conductivity and being robust may be prepared.

The sulfide-based solid electrolyte may also be a commercial solid electrolyte.

The oxide-based solid electrolyte may be, for example, Li₁₊ₓTi₂₋ₓAl(PO₄)₃(LTAP) (0 ≤ x ≤ 4), Li_{1+x+y}AlₓTi₂₋ₓSi_{y}P_{3-y}O₁₂ (0<x<2, 0 ≤ y<3), BaTiO₃, Pb(Zr,Ti)O₃(PZT), Pb₁₋ₓLaₓZr_{1-y}Ti_{y}O₃(PLZT) (0 ≤ x<1, 0 ≤ y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0 ≤ x ≤ 1, 0 ≤ y ≤ 1), lithium lanthanumtitanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, a Garnet-based ceramics Li₃₊ₓLa₃M₂O₁₂ (M= Te, Nb, or Zr, and x is an integer of 1 to 10), or a mixture thereof.

The solid polymer electrolyte may include at least one selected from, for example, polyethylene oxide, poly(diallyldimethylammonium)trifluoromethansulfonyl imide (poly(diallyldimethylammonium)TFSI), Cu₃N, Li₃N, LiPON, Li₃PO₄.Li₂S.SiS₂, Li₂S · GeS₂ · Ga₂S₃, Li₂O · 11Al₂O₃, Na₂O · 11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-Silicates, Li_{0.3}La_{0.5}TiO₃, Na₅MSi₄O₁₂ (M is a rare-earth element such as Nd, Gd, Dy, or the like) Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (0 ≤ x ≤ 0.8, 0 ≤ y ≤ 1.0, and M is Nd, Sm, Eu, Gd, Tb, Dy, Ho, Er, Tm, or Yb), Li_{1+x+y}QₓTi₂₋ₓSi_{y}P_{3-y}O₁₂ (0<x ≤ 0.4, 0<y ≤ 0.6, , and Q is Al or Ga), Li₆BaLa₂Ta₂O₁₂, Li₇La₃Zr₂O₁₂, Li₅La₃Nb₂O₁₂, Li₅La₃M₂O₁₂ (M is Nb, Ta) or Li₇₊ₓAₓLa₃₋ₓZr₂O₁₂ (0<x<3, and A is Zn).

The halide-based solid electrolyte may include a Li element, an M element (where M is a metal except for Li), and an X element (where X is a halogen). The X may be, for example, F, Cl, Br and I. In particular, the halide-based solid electrolyte may include at least one of Br and Cl, as the X. The M may be, for example, a metal element such as Sc, Y, B, Al, Ga, In, and the like.

The composition of the halide-based solid electrolyte is not limited, but the halide-based solid electrolyte may be represented by Li₆₋₃ₐMₐBr_{b}Cl_{c} (where, M is a metal, except for Li, 0<a<2, 0≤b≤6, 0≤c≤6, b+c=6). Herein, the a may be 0.75 or more, or 1 or more, and the a may be 1.5 or less. The b may be 1 or more, or 2 or more. Furthermore, the c may be 3 or more, or 4 or more. The exemplary of the halide-based solid electrolyte may be Li₃YBr₆, Li₃YCl₆ or Li₃YBr₂Cl₄.

The negative electrode-coating layer may further comprise additives such as, for example, a filler, a dispersant, an ionic conductive material, and the like. In addition, the filler, the dispersant, the ionic conductive material, or the like, which may be included in the negative electrode-coating layer, may be materials known in the related art which are generally used in the all-solid-state battery.

The negative electrode coating layer may have a thickness, for example, of 1 µm to 500 µm, 1 µm to 200 µm, 1 µm to 100 µm, or 1 µm to 50 µm , but is not limited thereto.

The negative electrode according to one embodiment may further include a current collector supporting the negative electrode-coating layer.

The current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape. A thickness of the negative electrode current collector may be 1 µm to 20 µm, 5 µm to 15 µm, or 7 µm to 10 µm.

The current collector may include the metal as a substrate and may further include a thin film on the substrate. The thin film may include an element being capable of forming an alloy with lithium, for example, gold, silver, zinc, tin, indium, silicon, aluminum, bismuth, or a combination thereof, but is not limited thereto and any elements known in the art as long as forming an alloy with lithium may be utilized. If the current collector further includes a thin film, the more flattened lithium-containing layer may be formed, if the lithium is deposited during charging to form the lithium-containing layer, thereby further improving the cycle-life characteristics of the all solid-state battery.

A thickness of the thin film may be 1 nm to 800 nm, 10 nm to 700 nm, 50 nm to 600 nm, or 100 nm to 500 nm. If the thickness of the thin film is within the range, the cycle-life characteristics may be further enhanced.

In one embodiment, the negative electrode-coating layer refers to a layer, that helps the movement of lithium ions released from the positive electrode active material to the negative electrode during charging and discharging of the all-solid-state battery, thereby facilitating their deposition on the surface of the current collector. For example, a lithium-containing layer, for example, a lithium deposition layer, due to the deposition of lithium ions between the current collector and the negative electrode coating layer may be formed, and the lithium deposition layer acts as a negative electrode active material, and this negative electrode is generally referred to as a deposition-type negative electrode.

The metal and the carbon-based material included in the negative electrode-coating layer do not act as a negative electrode active material which directly participates in the charge and discharge reaction. The deposition-type negative electrode represents a negative electrode that does not include a negative electrode active material during the battery fabrication, but the lithium-containing layer acts as a negative electrode active material.

The negative electrode according to one embodiment may further include, between the current collector and the negative electrode coating layer, a lithium-containing layer that is formed during the initial charge after the battery preparation. The thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer falls in the range, it may effectively perform the role of a lithium reservoir and the cycle-life characteristics may be further enhanced.

The lithium-containing layer may be formed after fabricating the battery during charging, as lithium ions are released from a positive electrode active material, pass through the solid electrolyte, and migrate toward the negative electrode, as a result, lithium is precipitated and deposited on the negative electrode current collector.

The charging may be a formation process which may be carried out one to three times at 0.05 C to 1 C at about 25 °C to 50 °C. If lithium is precipitated and deposited to form the lithium-containing layer, lithium included in the lithium-containing layer is ionized during discharging and moves toward the positive electrode, and thus, this lithium may be used as a negative electrode active material.

In one embodiment, as the lithium-containing layer is positioned between the current collector and the negative electrode coating layer, the negative electrode coating layer may serve as a protecting layer for the lithium-containing layer, and thus, the deposition growth of lithium dendrite may be suppressed. This enables to inhibit capacity fading and short-circuit of the all-solid-state battery and resultantly improve the cycle-life of the all-solid-state battery.

### <All-solid-state battery>

An all-solid-state battery according to one embodiment includes the negative electrode, a positive electrode and a solid electrolyte layer positioned between the positive electrode and the negative electrode.

### <Solid electrolyte layer>

In one embodiment, the solid electrolyte layer may include a solid electrolyte. It may be an inorganic solid electrolyte, such a sulfide-based solid electrolyte, an oxide-based solid electrolyte, a halide-based solid electrolyte, and the like, or solid polymer electrolyte.

In one embodiment, the solid electrolyte may be the sulfide-based solid electrolyte. The sulfide-based solid electrolyte is suitable, since it may have superior ionic conductivity compared to other solid electrolytes, such as oxide-based solid electrolyte, and may exhibit excellent cycle-life characteristics in a wider operating range.

The sulfide-based solid electrolyte, the oxide-based solid electrolyte, the halide-based solid electrolyte, and the solid polymer electrolyte are the same as those described above. Furthermore, this solid electrolyte included in the solid electrolyte layer may be the same as or different from the solid electrolyte included in the negative electrode-coating layer.

The solid electrolyte may have a particle shape. Herein, an average particle diameter (D50) of the solid electrolyte may be 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. Herein, the binder may be a styrene butadiene rubber, polytetrafluoroethylene, polyvinylidene fluoride, polyethylene, an acrylate-based polymer, or a combination thereof, but is not limited thereto, and may be any material which is generally used in the related art. The acrylate-based polymer may be butyl acrylate, polyacrylate, polymethacrylate, or a combination thereof.

The amount of the binder in the solid electrolyte layer may be appropriately adjusted, and there is no need to limit it.

The solid electrolyte layer may be prepared by adding a solid electrolyte to a binder solution, coating it on a substrate film, and drying it. The binder solution may include isobutyryl isobutylate, xylene, toluene, benzene, hexane, or a combination thereof, as a solvent. The solid electrolyte layer preparation is widely known in the art, so a detailed description thereof will be omitted in the specification.

A thickness of the solid electrolyte layer may be, for example, 10 µm to 150 µm.

The solid electrolyte layer may further include an alkali metal salt, and/or an ionic liquid, and/or a conductive polymer.

The alkali metal salt may be, for example, a lithium salt. In the solid electrolyte layer, an amount of the lithium salt may be 1 M or more, for example, 1 M to 4 M. In this case, the lithium salt may improve the lithium ion mobility of the solid electrolyte layer, thereby improving ionic conductivity.

The lithium salt, may be, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LIODFB), lithium difluoro(oxalato)borate (LiDFOB), lithium bis(trifluoromethanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄ or a mixture thereof.

Furthermore, the lithium salt may be an imide-based, for example, the imide-based lithium salt may be lithium bis(trifluoro methanesulfonyl)imide (LiTFSI, LiN(SO₂CF₃)₂), or lithium bis(fluorosulfonyl)imide (LiFSI, LiN(SO₂F)₂). The lithium salt may suitably maintain the chemical reactivity with the ionic liquid, and thus, the ionic conductivity may be maintained or improved.

The ionic liquid refers to a salt composed solely of ions, having a melting point at or below room temperature and being in a liquid state at room temperature, or to a room-temperature molten salt.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, or a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, or (CF₃SO₂)₂N⁻.

The ionic liquid may be, for example, at least one selected from N-methyl-N-propylpyrrolidinium bis(trifluoromethanesulfonyl)imide, N-butyl-N-methylpyrrolidinium bis (3-trifluoromethylsulfonyl)imide, 1-butyl-3-methylimidazolium bis(trifluoromethylsulfonyl)amide, or 1-ethyl-3-methylimidazolium bis(trifluoromethylsulfonyl)amide.

In the solid electrolyte layer, the weight ratio between the solid electrolyte and the ionic liquid may range from 0.1:99.9 to 90:10, for example, from 10:90 to 90:10, from 20:80 to 90:10, from 30:70 to 90:10, from 40:60 to 90:10, or from 50:50 to 90:10. The solid electrolyte layer within the range may have an improved electrochemical contact area to the electrode, and thus, the ionic conductivity may be maintained or improved. Accordingly, the energy density, discharge capacity, rate capability, or the like of the all-solid-state rechargeable battery may be improved.

### <Positive electrode>

The positive electrode for the all-solid-state battery according to one embodiment includes a positive electrode current collector and a positive electrode active material layer on one surface of the positive electrode current collector.

The positive electrode active material layer may include a positive electrode active material. The positive electrode active material may be a positive electrode active material that reversibly intercalate and deintercalate lithium ions. For example, the positive electrode active material may include one or more composite oxides of a metal selected from cobalt, manganese, nickel, and a combination thereof, and lithium. The examples of the positive electrode active material may be LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulas, A is selected from Ni, Co, Mn, or a combination thereof; B¹ is selected from Al, Ni, Co, Mn, Cr, Fe, Mg, Sr, V, a rare earth element, or a combination thereof; D¹ is selected from O, F, S, P, or combination thereof; E is selected from Co, Mn, or combination thereof; F¹ is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; J is selected from V, Cr, Mn, Co, Ni, Cu, or a combination thereof; L¹ is selected from Mn, Al, or a combination thereof.

According to one embodiment, the positive electrode active material may be a ternary lithium transition metal oxide such as LiNiₓCo_{y}Al_{z}O₂(NCA), LiNiₓCo_{y}Mn_{z}O₂(NCM) (wherein, 0<x<1, 0<y<1, 0<z<1, x+y+z=1), or the like.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixtures thereof. The coating layer may be formed by any coating method, for example, spray coating, dip coating, or the like, as long as the elements are applied to the compound in a manner that does not adversely affect the properties of the positive electrode active material, and a detailed description thereof is not illustrated since such methods will be readily understood by those of ordinary skill in the art.

Furthermore, the coating layer may be any coating materials which are known as a coating layer for the positive active material of the all-solid-state battery. For example, it may be a buffer layer which serves to reduce an interface resistance between the positive electrode active material and the solid electrolyte. For example, the buffer layer may include lithium-metal-oxide and this metal may be one or more elements selected from Al, B, Ca, Ce, Cr, Fe, Mg, Mo, Nb, Si, Sn, Sr, Ta, V, W, or Zr. The specific example of the buffer layer may be Li₂O-ZrO₂(LZO), LiNbO₂, or the like.

In addition, if the positive electrode active material is ternary material including nickel, cobalt, and manganese, or nickel, cobalt, and aluminum, the capacity density of the all-solid-state battery may be further improved, and metal dissolution from the positive electrode active material in a charged state may be further reduced. As a result, the long-term reliability and cycle characteristics of the all-solid-state battery in a charged state may be further improved.

The average particle diameter of the positive electrode active material may be 1 µm to 25 µm, for example, 3 µm to 25 µm, 1 µm to 20 µm, 1 µm to 18 µm, 3 µm to 15 µm, or 5 µm to 15 µm. For example, the positive electrode active material may include small particles with an average particle diameter (D50) of 1 µm to 9 µm and large particles with an average particle diameter (D50) of 10 µm to 25 µm. The positive electrode active material with such a particle diameter range may be harmoniously mixed with other components in the positive electrode active material layer and may achieve high capacity and high energy density.

The positive electrode active material may be secondary particles where a plurality of primary particles is agglomerated, or monocrystalline (single crystal). Furthermore, the shape of the positive electrode active material may be, a spherical shape, a shape close to spherical, or a polyhedron shape, or unspecified shape.

In the positive electrode active material layer, an amount of the positive electrode active material is not limited, and may be in any range which may be applied to a positive electrode layer of the conventional rechargeable all-solid-state battery. For example, based on the total 100 wt% of the positive electrode active material layer, the positive electrode active material may be included at 55 wt% to 99.5 wt%, for example, 65 wt% to 95 wt%, or 75 wt% to 91 wt%.

The positive electrode active material layer may further include a binder and/or a conductive material.

The binder may be polyvinyl alcohol, carboxymethyl cellulose, hydroxypropyl cellulose, diacetylcellulose, polyvinylchloride, carboxylated polyvinylchloride, polyvinyl fluoride, polyethylene oxide, polyvinyl pyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, or the like, but is not limited thereto.

The binder may be included in an amount of 0.1 wt% to 5 wt%, or 0.1 wt% to 3 wt% based on the total 100 wt% of the positive active material layer. Within the range of amount, the binder may exhibit sufficient adhesion ability without deteriorating the battery performance.

The conductive material is included to impart conductivity to the electrode, and any material having electronic conductivity may be used without causing a chemical change in the battery. Examples of the conductive material may include a carbon-based material such as natural graphite, artificial graphite, carbon black, acetylene black, ketjen black, carbon fiber, carbon nanofiber, carbon nanotubes or the like; a metal-based material of a metal powder or a metal fiber including; copper, nickel, aluminum, silver, or the like; a conductive polymer such as polyphenylene derivatives; or mixtures thereof.

The conductive material may be included in an amount of 0.1 wt% to 5 wt%, or 0.1 wt% to 3 wt% based on the total 100 wt% of the positive electrode active material layer. The conductive material in the above amount range may improve the electrical conductivity without deteriorating battery performance.

The positive electrode active material layer may further include a solid electrolyte. The solid electrolyte included in the positive electrode active material layer may be an inorganic solid electrolyte such as a sulfide-based solid electrolyte, an oxide-based solid electrolyte, a halide-based solid electrolyte, or the like, or solid polymer electrolyte. The solid electrolyte is described above with respect to the solid electrolyte and may be the same as or different from the solid electrolyte included in the solid electrolyte.

Based on the total weight of the positive electrode active material layer, the solid electrolyte may be included at an amount of 0.1 wt% to 35 wt%, for example, 1 wt% to 35 wt%, 5 wt% to 30 wt%, 8 wt% to 25 wt%, or 10 wt% to 20 wt%. In the positive electrode active material layer, based on the total weight of the positive electrode active material and the solid electrolyte, the positive electrode active material may be included at an amount of 65 wt% to 99 wt% and the solid electrolyte may be included at an amount of 1 wt% to 35 wt%, for example, the positive electrode active material may be included at an amount of 80 wt% to 90 wt% and the solid electrolyte may be included at an amount of 10 wt% to 20 wt%. If the solid electrolyte with the amount of the above range is included in the positive electrode, the efficiency and cycle-life characteristic of the all-solid-state battery may be improved, without deterioration of capacity. The solid electrolyte may be included at an amount of 0.1 10 wt% to 30 wt% based on the total 100 wt% of the positive electrode active material layer.

### < Elastic layer >

The all-solid-state battery according to one embodiment may further include an elastic layer which may buffer changes in thickness generated during charging and discharging. The elastic layer may be positioned between the negative electrode and a case.

The elastic layer may include a material having an elastic recovery rate of 50 % or more and insulating properties, and specifically, may include silicone rubber, acrylic rubber, fluorinated rubber, nylon, synthetic rubber, or a combination thereof. The elastic material may be present in a form of a polymer sheet.

### <Fabrication of all-solid-state battery>

The all-solid-state battery according to some embodiments may be fabricated by preparing an assembly including a negative electrode, a positive electrode, and a solid electrolyte layer positioned between the negative electrode and the positive electrode, and pressing the assembly.

The pressing may be carried out at a temperature of 25 °C to 90 °C. The pressing may be carried out under a pressure of 550 MPa or less, for example, 500 MPa or less, for example, a pressure of 1 MPa to 500 MPa. The pressing time may be varied depending on temperature, pressure, or the like, for example, it may be less than 30 minutes. The pressing may be carried out using, for example, isostatic press, roll press, plate press, or warm isostatic press (WIP).

The all-solid-state secondary battery may be a unit battery including a structure of the positive electrode/ the solid electrolyte layer/the negative electrode, a bicell including a structure of the positive electrode/the solid electrolyte layer/the negative electrode/the solid electrolyte layer/ the positive electrode, or a stacked battery where the unit batteries are repeated.

The shapes of the all-solid-state rechargeable battery are not limited, but, for example, a coin-type, a button-type, a sheet-type, a laminate-type, a cylindrical-type, or a flat-type, or the like. Furthermore, the all-solid-state rechargeable battery may be applied to large-sized batteries used in electric vehicles or the like. For example, the all-solid-state rechargeable battery may be also used in hybrid vehicles such as a plug-in hybrid electric vehicle (PHEV), or the like. Furthermore, the all-solid-state rechargeable battery may be utilized in various applications requiring large-capacity energy storage, and for example, may be applied to electric bicycles or power tools. Furthermore, the all-solid-state rechargeable battery may be used in various fields such as portable electronic devices.

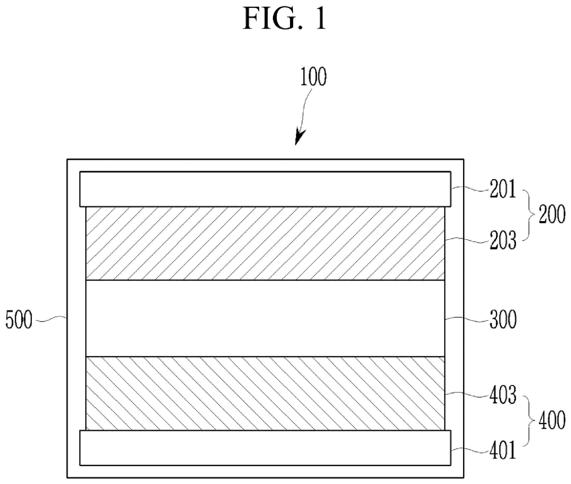

FIG. 1 is a cross-sectional view showing the all solid-state battery according to one embodiment. Referring to FIG. 1, the all solid-state battery 100 may have a structure in which an electrode assembly, in which a negative electrode 400 including a negative electrode current collector 401 and a negative electrode coating layer 405, a solid electrolyte layer 300, and a positive electrode 200 including a positive electrode active material layer 203 and a positive electrode current collector 201, are stacked, is accommodated in a case such as a pouch, or the like. The all-solid-state battery 100 may further include an elastic layer 500 positioned on the outside of at least one of the positive electrode 200 and the negative electrode 400.

In addition, if the all-solid-state battery is charged, lithium ions are released from the positive electrode active material and deposited on the negative electrode current collector 401, so that a lithium-containing layer (lithium deposition layer) may be also formed.

FIG. 1 shows one electrode assembly including a negative electrode 400, a solid electrolyte layer 300, and a positive electrode 200, but an all-solid-state battery may also be fabricated by stacking at least two electrode assemblies. For example, the electrode assemblies may be stacked in numbers such as 2 to 100, 3 to 50, or 4 to 20, and so on.

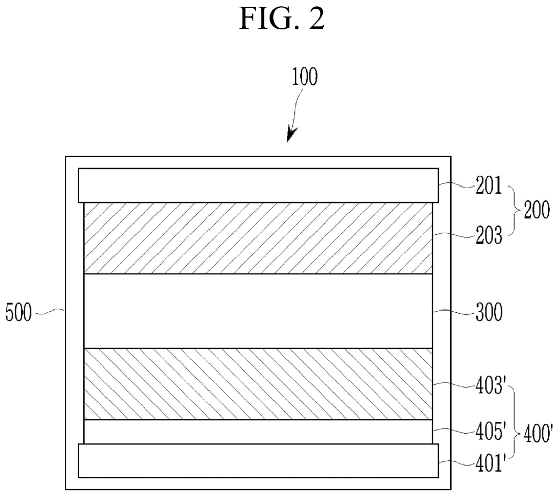

FIG. 2 schematically shows the all-solid-state battery of another embodiment. The all-solid-state battery 100 shown in FIG. 2 includes a positive electrode 200 including a positive electrode current collector 201 and a positive electrode active material layer 203, a negative electrode 400 including a negative electrode current collector 401 and a negative electrode coating layer 403, a solid electrolyte 300 between the positive electrode 200 and the negative electrode 400, a battery case 500 in which these are housed, and a lithium deposition layer 405' between the negative electrode current collector 401 and the negative electrode coating layer 403.

### MODE FOR PERFORMING THE INVENTION

Hereinafter, examples of the present invention and comparative examples are described. These examples, however, are not in any sense to be interpreted as limiting the scope of the invention.

### (Example 1)

### 1) Preparation of negative electrode

A binder in which polyacrylic acid and styrene-butadiene rubber were mixed at a weight ratio of 5:4, was added to an N-methyl pyrrolidone solvent to prepare a binder solution.

Carbon black having a primary particle diameter (D50) of approximately 30 nm and silver (Ag) having an average particle diameter (D50) of approximately 60 nm were added to the binder solution and mixed to prepare a negative electrode coating layer composition. Herein, the amounts of the binder, carbon black, and silver were used in order to have a weight ratio of 9:75:25.

The negative electrode coating layer composition was coated on a nickel foil current collector using a bar coater and vacuum-dried to prepare a negative electrode.

A LiNi_{0.8}Co_{0.15}Mn_{0.05}O₂ positive electrode active material of 85 wt%, a lithium argyrodite-type solid electrolyte Li₆PS₅Cl of 13.5 wt%, a polyvinylidene fluoride binder of 1.0 wt%, and a carbon nanotube conductive material of 0.5 wt% were mixed in an N-methyl pyrrolidone solvent to prepare a positive electrode composition.

The positive electrode composition was coated on an aluminum positive electrode current collector using a bar coater, dried, and pressed to prepare a positive electrode.

### (3) Preparation of solid electrolyte layer

A binder solution (solid content: 50 wt%), in which an acrylate-based polymer of butyl acrylate was added to an isobutylyl isobutylate, was added to and mixed with an argyrodite-type solid electrolyte Li₆PS₅Cl. Herein, a mixing ratio of the solid electrolyte and the binder was adjusted in order to have a weight ratio of 98.7: 1.3.

The mixing process was carried out using a Thinky mixer. A 2 mm zirconia ball was added to the resulting mixture, and the mixture was stirred again using a Thinky mixer to prepare a slurry. The slurry was cast onto a release polytetrafluoroethylene film and dried at room temperature to prepare a solid electrolyte layer having a thickness of 100 µm.

### (4) Fabrication of all-solid-state full cell

The negative electrode, the solid electrolyte layer, and the positive electrode were sequentially stacked and subjected to isostatic pressing at 380 MPa, thereby fabricating a rechargeable all-solid-state cell.

### (Example 2)

An all-solid-state cell was fabricated in the same manner as in Example 1, except that a binder in which polyacrylic acid and styrene-butadiene rubber were mixed at a weight ratio of 5:3 was used, and the amount of the binder, carbon black, and silver was changed in order to have a weight ratio of 8:75:25.

### (Example 3)

An all-solid-state cell was fabricated in the same manner as in Example 1, except that a binder in which polyacrylic acid and styrene-butadiene rubber were mixed at a weight ratio of 5:2 was used, and the amount of the binder, carbon black, and silver was changed in order to have a weight ratio of 7:75:25.

### (Comparative Example 1)

An all-solid-state cell was fabricated in the same manner as in Example 1, except that a binder solution prepared by adding a styrene-butadiene rubber binder to an N-methyl pyrrolidone solvent was used.

### (Comparative Example 2)

An all-solid-state cell was fabricated in the same manner as in Example 1, except that a binder in which polyacrylic acid and styrene-butadiene rubber were mixed at a weight ratio of 5:1 was used, and the amount of the binder, carbon black, and silver was changed in order to have a weight ratio of 6:75:25.

### (Comparative Example 3)

An all-solid-state cell was fabricated in the same manner as in Example 1, except that a binder in which polyacrylic acid and styrene-butadiene rubber were mixed at a weight ratio of 5:5 was used, and the amount of the binder, carbon black, and silver was changed in order to have a weight ratio of 10:75:25.

### (Comparative Example 4)

An all-solid-state cell was fabricated in the same manner as in Example 1, except that a binder in which a copolymer of polyvinyl alcohol and polyacrylic acid, and styrene-butadiene rubber were mixed at a weight ratio of 5:4 was used.

The total amounts of the binder included in the negative electrode-coating layer of Examples 1 to 3 and Comparative Examples 1 to 4 are shown in Table 1.

### Experimental Example 1) Evaluation of electrical resistance

The electrical resistance (surface resistance) of the negative electrodes according to Examples 1 to 3 and Comparative Examples 1 to 3 was measured using a 4-probe method by probing 46 pins (XF057, manufactured by HIOKI), and the results are shown in Table 2.

### Experimental Example 2) Measurement of initial coulombic efficiency

The all-solid-state cells according to Examples 1 to 3 and Comparative Examples 1 to 4 were charged and discharged once at 45 °C at 0.1 C. The discharge capacity/charge capacity ratio was calculated, and the results are shown in Table 1, as initial Coulombic efficiency.

### Experimental Example 3) Measurement of capacity retention

The all-solid-state cells according to Examples 1 to 3 and Comparative Examples 1 to 3 were charged and discharged 100 times at 45°C at 0.1C. The ratio of the 100^{th} discharge capacity to the 1^{st} discharge capacity was calculated. The results are shown in Table 1, as the capacity retention.

**Table 1**

| | Total amount of binder (wt%) | PAA;SBR weight ratio | Resistance (Ω) | Initial coulombic efficiency (%) | Capacity retention (%) |
|---|---|---|---|---|---|
| Example 1 | 8.26 | 5:4 | 2.7 | 91.6 | 87.0 |
| Example 2 | 7.41 | 5:3 | 2.5 | 91.4 | 86.1 |
| Example 3 | 6.54 | 5:2 | 2.3 | 90.6 | 86.2 |
| Comparative Example 1 | 8.26 | CMC:SBR=1:2 | 4.0 | 85.2 | 84.5 |
| Comparative Example 2 | 5.66 | 5:1 | 1.8 | 90.8 | 83.3 |
| Comparative Example 3 | 9.09 | 5:5 | 3.2 | 88.1 | 83.0 |
| Comparative Example 4 | 8.26 | PVA-PAA:SBR weight ratio=5:4 | 2.8 | 89.0 | 85.5 |

As shown in Table 1, the all-solid-state cells according to Examples 1 to 3 including polyacrylic acid and styrene-butadiene rubber in a weight ratio of 5:2 to 5:4 exhibit low resistance, high initial coulombic efficiency, and excellent capacity retention.

On the other hand, Comparative Example 1 consisting only styrene-butadiene rubber exhibited high resistance, resulting in decreased initial coulombic efficiency and capacity retention.

The all-solid-state cell of Comparative Example 2 including polyacrylic acid and styrene-butadiene rubber in a weight ratio of 5:1 had low resistance and high initial coulombic efficiency, but exhibited degraded cycle life characteristics.

The all-solid-state cell of Comparative Example 3 including polyacrylic acid and styrene-butadiene rubber in a weight ratio of 5:5 had somewhat improved cycle life characteristics, but had high resistance and low initial coulombic efficiency.

In Comparative Example 4 using a polyvinyl alcohol-polyacrylic acid copolymer instead of polyacrylic acid together with styrene-butadiene rubber, the resistance did not significantly increase compared to Example 1, but coulombic efficiency and capacity retention decreased.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A negative electrode for an all-solid-state battery, comprising:
a negative electrode-coating layer comprising a binder comprising polyacrylic acid and a styrene-butadiene rubber in a weight ratio of 5:4 to 5:2; a carbon-based material; and a metal.

2. The negative electrode for an all-solid-state battery as claimed in claim 1, wherein an amount of the binder is 6 wt% to 10 wt% based on the total 100 wt% of the negative electrode-coating layer.

3. The negative electrode for an all-solid-state battery as claimed in claim 1, wherein the carbon-based material is crystalline carbon, amorphous carbon, or a combination thereof.

4. The negative electrode for an all-solid-state battery as claimed in claim 1, wherein the carbon-based material is amorphous carbon.

5. The negative electrode for an all-solid-state battery as claimed in claim 4, wherein the amorphous carbon is carbon black, acetylene black, denka black, ketjen black, furnace black, activated carbon, graphene, or combinations thereof.

6. The negative electrode for an all-solid-state battery as claimed in claim 1, wherein the metal is Ag, Au, Sn, Zn, Al, Mg, Ge, Cu, In, Ni, Bi, Pt, Pd, or a combination thereof.

7. The negative electrode for an all-solid-state battery as claimed in claim 1, wherein the metal is Ag.

8. The negative electrode for an all-solid-state battery as claimed in claim 1, wherein the metal is supported on the carbon-based material in the negative electrode-coating layer.

9. The negative electrode for an all-solid-state battery as claimed in claim 1, wherein an amount of the carbon-based material is 55 wt% to 80 wt% based on the total 100 wt% of the negative electrode-coating layer.

10. The negative electrode for an all-solid-state battery as claimed in claim 1, wherein an amount of the metal is 14 wt% to 35 wt% based on the total 100 wt% of the negative electrode-coating layer.

11. The negative electrode for an all-solid-state battery as claimed in claim 1, wherein the metal has a size of 5 nm to 800 nm.

12. An all-solid-state battery, comprising:
a negative electrode of any one of claim 1 to claim 11;
a positive electrode; and
a solid electrolyte layer positioned between the positive electrode and the negative electrode.
